# EUROPEAN PATENT APPLICATION

(11) **EP 3 028 575 A1**
(43) Date of publication of application: **08.06.2016**
(21) Application number: 15465558.3
(22) Date of filing: 23.11.2015
(51) Int. Cl.: A23B 7/04, A23B 7/055

(54) **PROCESS FOR PROCESSING AND PRESERVING DRY BEANS FOR CONSUMPTION PURPOSES**

(30) Priority: 02.12.2014 RO 201400941
(71) Applicant: Varga, Luiza, Timisoara (RO)
(72) Inventor: Varga, Luiza, Timisoara (RO)
(74) Representative: Pop, Calin Radu

(57) **Abstract**

The invention relates to a process for processing and preserving the dry beans for consumption purposes. The process according to the invention consists in pre-boiling the dry beans, with or without previous soaking, cooling them, eliminating the water excess, freezing the beans by techniques known per se, with or without defrosting and boiling, resulting in dry beans for consumption, having a protein content of 8.35-8.80%.

## Description

The present invention refers to a process for processing - preserving dried beans intended for food consumption, as such, or together with conventional ingredients, in various forms, with or without their further processing.

In order to obtain dehidrated vegetables or fruits for consumption purposes, while maintaining characteristics of flavour, smell, colour or texture and to reduce rehydration in time, it is known an improved process for the irradiation of certain vegetables, such as dehydrated vegetables other than potatoes, including dried beans, or dehydrated fruits, using electron beams, gamma rays or X-rays (GB. 1.166.608).

The disadvantage of processes using that radiations consist in that the irradiation with high energy ionizing radiations nevertheless result in undesirable changes of some properties of vegetables or dehydrated fruits.

Also known are processes for freezing vegetables and fruits în order to preserve them for certain periods of time, while maintaining characteristics of flavour, smell, colour or texture [1]. W. F. Stoecker, Industrial Refrigeration Handbook, 2000, Chapter 17. Refrigeration and freezing of foods, 17.10 The freezing process.

The fast freezing technology (flash freezing) subjeting the product directly to cryogenic temperatures, such as that of liquid nitrogen or liquid carbon dioxid, is a more recent method, but is used throughout the world by industrial food manufacturers. W. B. Bald, Food Freezing: Today and Tomorrow. 203 Seiten, 54 Abb. Springer-Verlag, London, Berlin, Heidelberg u.a. 1991. Preis: 148,-DM; J.P.Miller, The Use of Liquid Nitrogen in Food Freezing, pp.157-170, Institute for Applied Biology, Springer-Verlag. Freezer technology (flash freezing) subjecting the product directly to cryogenic temperatures, such as liquid nitrogen or liquid carbon dioxide, is a more recent, but is used throughout the world by industrial food manufacturers.

The proposed technical problem to be solved is to provide a process which produces a product for consumption purposes without further processing by thawing-boiling before use, only when is wanted the association with other ingredients.

The present invention refers to a process for processing-preserving dry beans for consumption purposes consisting of preliminary boiling of beans, with or without soaking, and then cooling the beans, followed by removal of water excess, freezing them using different types of freezing, selected from rapid freezing, and freezing by direct immersion in cryogenic liquid, such as N₂, dry ice, with or without, thawing, and boiling, to yield the final product used for consumption purposes.

The soaking step is carried out by immersing the beans in water over a period of time of 5 to 14 hours.

The freezing step is carried out in mechanical refrigerators, at the temperature of-20° C in a period of time ranging from 30 to 75 minutes.

In another embodiment, the freezing step is carried out at the temperature of -80° C in a period of time ranging from 15 to 35 minutes.

In another embodiment, the freezing step is carried out by (flash freezing) immersion in cryogenic liquid, such as liquid nitrogen or dry ice.

The advantages resulted by applying the present invention derive from the fact that by a relatively simple process can be obtained beans which maintains the levels of nutrients, and which may be used instantly, without processing before consumption, but only with conventional ingredients addition.

In the following, the invention will be illustrated by 4 embodiments in connection with Figures 1-7.
**Fig. 1** shows beans, and the source of their purchasing.
**Fig. 2****.** shows the evaluation of probe P1, with previous soaking (14 h).
**Fig. 3** shows the appearance of the samples from the lot with soaking, after their freezing.
**Fig. 4****.** shows the appearance of the beans from the control sample, after boiling.
**Fig. 5****.** shows aspects regarding running of evaluation steps of the probes P2, which have not been subjected to the step of soaking
**Fig.6****.** The evaluation of probe subjected to hydration, pre-boiling, and freezing in liquid N₂ (P4/P5).
**Fig. 7****.** Processing of probe P6.

Beans (Phaseolus vulgaris) is one of the most consumed vegetables. Dry beans are rich in proteins, fibers, and minerals. Generally, beans are consumed fresh or they can be kept as such for later consumption.

It is known that, the methods for freezing preserve most nutrients in frozen vegetables. In order to preserve textural characteristics, freezing must be made as rapidly as possible. This is because large ice crystals are formed on slower freezing, which can destroy the cells adversely affecting the product texture resulting in degradation of organoleptic quality [1].

The process according to the invention is useful when it is desired a quick preparation, (knowing that, usually ∼2 hours are needed in order to cook fresh beans) for practical considerations, and without loosing the texture, and nutritional elements.

In the case of beans, according to the present invention, before freezing, it is necessary to soak it for at least 5 hours, followed by a preliminary boiling. This assures texture preservation, and organoleptic quality of the product after final boiling for consumption.

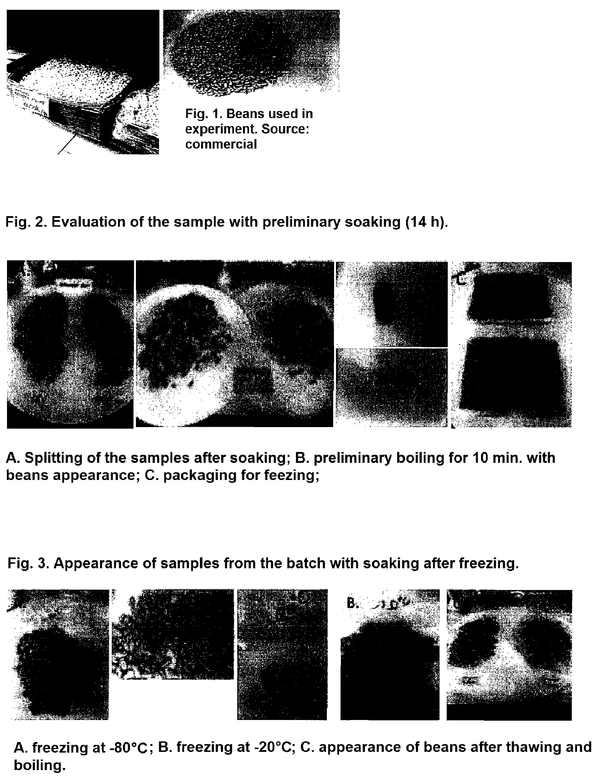

The sample of beans used in the present invention was commercially available. It was selected the type with average grain size. The size of the beans was: 14.8 ± 1.88mm length; 7.1 ± 0.6 mm width (Fig.1).

### Example 1.

The samples were weighed in samples of 125 g each (duplicate/working embodiment). In the first step, bean samples were subjected to the process of immersion in tap water in a Berzelius beaker, overnight. Then, the samples were cooked in tap water in Teflon dishes of 1.5 l, for 10 minutes once the water has reached the boiling point, until the first sign of disintegration of the bean skin, while reducing bean firmness (Fig. 2). After preliminary boiling, the samples were transferred on filter paper (Whatman) to remove water excess (approx. 10 minutes). Each sample was packed in (commercial) plastic freezer bags, in a single layer, and were frozen. The freezing step was carried out at -20 ° C (classic Arctic freezer) for 75 Minutes, then the samples were stored frozen, and kept for marketing.

The freezing time was recorded by assessing samples at an interval of 10 minutes. The freezing time was quantified from the moment of placing samples in the freezer (to) until complete freezing of beans (t₁) (3A, detail). The freezing time = t₀ + t₁.

The process can be continued with the step of thawing and boiling for consumption. The samples were left for 10 minutes, at room temperature, then boiled in the same container as the preliminary boiling. The boiling time was quantified once the water has reached the boiling point, and until significant decrease in firmness of the bean, but without leading to a total loss/full of integrity of the bean (sample), taking into account aesthetics. The boiling time was 20 ± 3 minutes (Figure 3 / C). A mixture of the two samples was subjected to nutritional analysis.

Evaluation of the nutritional value of beans after thawing, and boiling for consumption.

Spectrophotometric method was used to determine nutritional values, according to standards:
- For determining moisture SR ISO 1442/2010
- For determining fat SR 91-14.4 / 2007
- For determining ash SR 2171/2010
- For determining protein SR ISO 937/2007. The assays were performed in the laboratory of SC Biot B & S LLC

The sample resulting from applying the procedure of Example 1, and analyzed in accordance with the above standards, had the following nutritional characteristics:

### Sample 1:

Fat = 0.12%;
Ash = 1,13%;
Humidity = 63.60%;
**Protein** = **9.80%;**
Carbohydrates = 25.35%;
**Calorific value 145.23 kcal / 100 g**

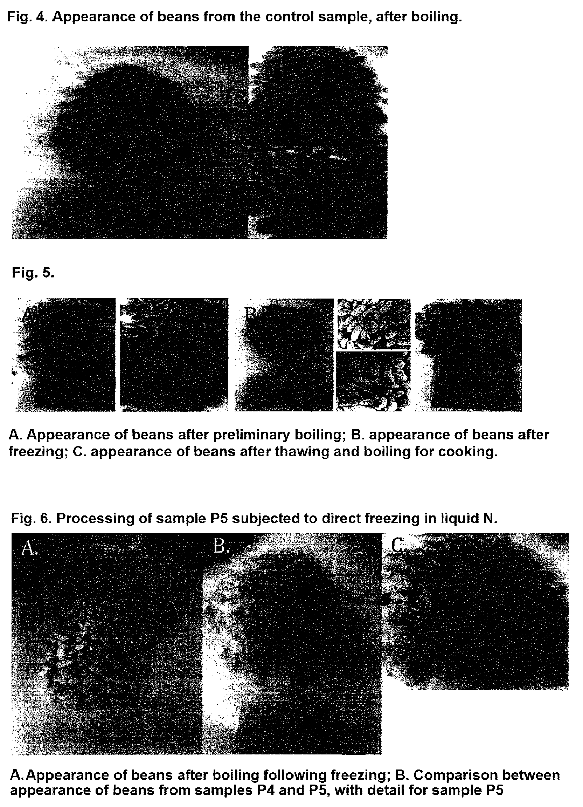

A control sample consisting of 125 g of beans/in duplicate was subjected directly to boiling (the classic process) in the same equipment described above, until significant decrease in firmness of the beans, but without leading to a full/complete loss of integrity of beans (proof), taking into account aesthetics (Figure 4). A mixture of the two samples was subjected to nutritional analysis.

The control sample, performed in classical conditions of boiling the beans in the household was analyzed in accordance with the above rules, and presented the following nutritional characteristics:

### Sample 2: control sample

Fat = 0.12%;
Ash = 1,03%;
Humidity 67.99%;
**Protein, 8.78%;**
Carbohydrates = 22.08%;
**Calorific value: 127.64 kcal / 100g.**

### Example 2.

Example 2 was carried out under similar conditions to those in Example 1 except the freezing step, which was carried out at 80° C (ThermoScientific shape model 900 series) for 30 min. (Fig. 3A).

### Example 3.

The bean samples were subjected to the step of preliminary boiling as in Example 1, the preliminary boiling time for sample P2 being quantified from the moment water has reached the boiling point, until the first sign of decay of the beans skin, simultaneously with partial reduction of the bean firmness.

The time for preliminary boiling, was in this case 25 ±5 min. Removal of water excess was performed for 10 minutes on a filter paper. The freezing, quantified in the same way as above, was of 30 min at -80°C. probes were left 10 min. at room temperature, and then subjected to boiling following the method described in Example 1. During the preliminary boiling was in this case 25 ± 5 min. The boiling time was quantified once the water has reached the boiling point, and to significant decrease in firmness of the grain, but not to reach a total loss / full integrity of grain (sample), taking into account aesthetics. The boiling time was 40 ± 3 minutes (Fig. 5/C). A mixture of the two samples was subjected to nutritional analysis.

The evaluation of the nutritional value of beans after thawing and boiling for consumption.

The sample resulting from applying the procedure of Example 3 and analyzed in accordance with the above rules had the following nutritional characteristics:

### Sample 3:

Fat = 0.18%;
Ash = 1.24%;
Humidity = 66.33%;
**Protein** = **8.55%;**
Carbohydrates = 23.7%;
**Calorific value: 133.89 kcal / 100 g**

### Example 4

A sample of beans of 125 g/in duplicate was soaked by immersion in tap water overnight, and preliminary boiled as described above for the sample of Example 1. The preliminary boiling time for this sample was quantified from the moment water has reached the boiling point, and until the first sign of disintegration of the beans skin, simultaneously with partial reduction of bean firmness. The preliminary boiling time was 10 minutes. The removal of water excess was carried out for 10 minutes on a filter paper. The time of freezing in liquid N₂ was 2 minutes, by immersing the sample directly into liquid N₂. The sample was then stored at -80 ° C (Figure 4).

The samples were left for 10 minutes at room temperature, and were subjected to boiling as described above. The time for boiling was quantified once the water has reached boiling point, and until significant decrease in firmness of the bean, but without leading to a total loss / full integrity of bean (sample), taking into account aesthetics. The time for boiling was 10 ± 3 minutes (Figure 4 / C).

### Example 5.

The same quantity of beans (sample P5), in duplicate, was soaked by overnight immersion in tap water, and was preliminary boiled for 10 minutes according to the method described above for the sample of Example 1, then was frozen directly by immersion in liquid N₂ and stored at -80 ° C, after that the samples were left for 10 minutes at room temperature, and were subjected to boiling, following the method described above. The boiling time was quantified as above, taking into account aesthetics. The boiling time was 5 minutes (Fig. 6).

### Example 6

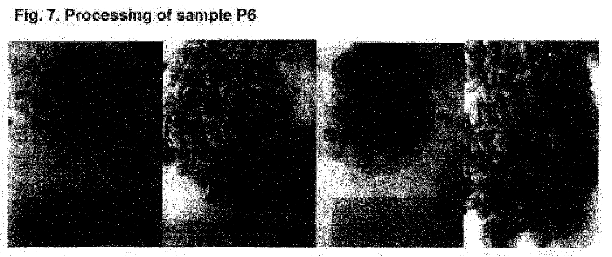

A sample (P6) of beans 125g / duplicate without softening was preliminary boiled for 25 ± 5 min. Removal of water excess was carried out for 10 minutes on a filter paper, then frozen by immersing the sample directly into liquid N₂ for 2 minutes (Fig. 7). The sample was then kept at -80 ° C, and it was stored for consumption.

## Claims

1. Process for processing-preserving dry beans for consumption purposes, **characterized in that,** it consists in preliminary boiling of dry beans, with or without, soaking, and then cooling the beans, followed by removing water excess, freezing the beans using different types of freezing selected from fast freezing, and freezing by direct immersion in cryogenic liquid such as N₂, dry ice, with or without thawing, and boiling, to yield the final product used for consumption purposes.

2. Process according to claim 1, **characterized in that,** the soaking step is carried out by immersing the beans in water over a period of 5.....14 hours.

3. Process according to claim 1, **characterized in that,** the freezing step is carried out at the temperature of - 20° C over a period of time of between 30 ....75 minutes.

4. Process according to claim 1, **characterized in that,** the freezing step is carried out at the temperature of - 80°C, in a period of time between 15 ...30 minutes.

5. Process according to claim 1, **characterized in that,** the freezing step is carried out by immersion in cryogenic liquid such as liquid N₂ or dry ice.

6. Process according to claim 1, **characterized in that,** the beans for consumption purposes resulted have a protein content of 8.35 ....8.80 %.
